# EUROPEAN PATENT SPECIFICATION

(11) **EP 0 674 129 B1**
(45) Date of publication and mention of the grant of the patent: **02.01.2002**
(21) Application number: 95102630.1
(22) Date of filing: 24.02.1995
(51) Int. Cl.: F16K 17/36, F16K 24/04, B60K 15/035

(54) **Vent and safety roll-over valve for vehicle tanks**
Überrollventil für die Entlüftung und die Sicherheit eines KFZ-Kraftstoffbehälters
Clapet de retournement pour la ventilation et le sécurité d'un réservoir pour véhicules automobiles

(30) Priority: 28.02.1994 IT TO940132
(43) Date of publication of application: 27.09.1995
(73) Proprietor: ERSI ITALIA S.p.A., 10071 Borgaro Torinese (Torino) (IT)
(72) Inventor: Lobascio, Osvaldo, I-10144 Torino (IT); Rocca, Andrea, I-10025 Pino Torinese(Torino) (IT)
(74) Representative: Rambelli, Paolo

(56) References cited:
- US-A- 3 910 302
- US-A- 4 351 350
- US-A- 5 044 389

## Description

The present invention relates to a vent and safety roll-over valve for vehicle tanks, according to the preamble of claim 1.

A valve of this type is known from document US-A-3 910 302, in which the bell-shaped fixed body has a bottom flange for trapping the bell-shaped movable body between the bottom flange itself and the upper wall of the fixed body. This known valve has three pieces, that is the fixed hollow body, the movable hollow body and the bottom flange. The lower edge of the bell-shaped movable body and the bottom flange constitute mutual engagement formations to imprison the movable body in the fixed body.

One object of the invention is to provide a vent and safety valve which is simpler and less expensive than that of the document US-A-3 910 302 as it is made up of only two parts.

Another object of the invention is to provide a vent and safety valve of the type defined in the preamble of claim 1, which is able to close more effectively than that of document US-A-3 910 302 so as to prevent the passage of liquid fuel from the tank to the vent pipe union thanks to the thrust exerted on the movable body by a spurt of fuel.

These objects are achieved according to the invention by a valve as claimed.

A valve as claimed, thanks to the fact that the engagement formations are constituted by apertures formed in the skirt of the fixed body, and by peripheral projections formed on the skirt of the movable body, can be made up of only two parts, that is the fixed body and the movable body, while a third part, which in document US-A-3 910 302 is represented by the bottom flange, is no longer necessary.

Thanks to the claimed arrangement, since the projecting lower open end of the bell-shaped movable body is not covered, a spurt of fuel can hit it directly and penetrate the bell itself, thus exerting an effective force towards its closed position.

Further characteristics and advantages of the invention will become apparent from the detailed description which follows, given with reference to the appended drawings, provided purely by way of non-limitative example, in which:
Figure 1 is a longitudinal section of the valve,
Figure 2 is an exploded perspective view of the valve, and
Figure 3 is a longitudinal section similar to that of Figure 1, showing the step in which the fixed and movable bodies are assembled.

With reference to the drawings, a vent and safety valve comprises only two parts moulded in fuel-resistant plastics material, for example an acetal resin.

One of the two elements is a fixed body, generally indicated 10, while the other is a movable body, generally indicated 12.

The fixed body 10 is shaped like a bell which is open towards the inside of the tank. This bell is defined by a substantially cylindrical skirt 14 and by an upper wall or crown 16.

The skirt 14 has an outer peripheral flange 18 to enable it to be sealed, in known manner, in a hole in the upper wall of a tank.

A conical valve seat 20 is formed inside the body 10, in the upper wall 16. A pipe union 22 is formed on the outside of the upper wall 16 for connection to a vent pipe. A through-hole 24 puts the top of the valve seat into communication with the inside of the pipe union 22. Nearer its open end, the skirt 14 has apertures 26 whose function will be explained later.

The movable body 12 is also of bell or tumbler shape and is slidably mounted, with clearance, in the skirt 14 of the fixed body 10 and comprises a skirt 28 and an upper wall 30.

The upper wall 30 of the movable body 12 has a conical projection 32 constituting an obturator pin for cooperating with the valve seat 20.

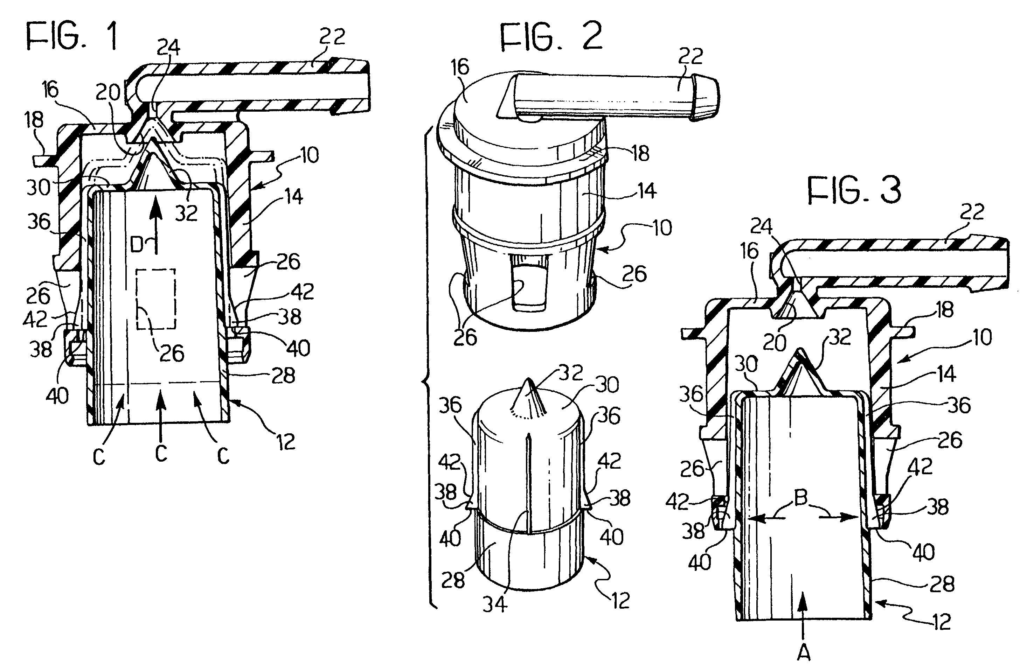

The movable body 12 is slidable with clearance in the skirt 14 of the fixed body 10 between an open position of the valve and a closed position of the valve. In the open position, shown in full outline in Figure 1, the obturator pin 32 does not engage the valve seat 20; in the closed position, illustrated in broken outline in Figure 1, the pin 32 engages the valve seat 20.

The movable body 12 is slidably imprisoned in the fixed body 10 by mutual engagement formations formed on the respective skirts 14 and 28 of the two bodies 10 and 12.

The preferred mutual engagement formations are described hereafter.

As already stated, the skirt 14 of the fixed body 10 has apertures 26.

The movable body 12, on the other hand, has corresponding longitudinal peripheral ribs 34 and 36 formed on its skirt 28.

The ribs 34 are smooth and act as spacers between the two skirts 14 and 28, defining a peripheral interspace for fuel vapours to flow from the tank to the pipe union 22 when the valve is open.

The ribs 36 also act as spacers. Unlike the ribs 34, however, they have peripheral projections 38 on their ends nearer the tank.

As can be seen in Figure 1, the peripheral projections 38 formed on the skirt 28 of the movable body 12 are engaged permanently in the apertures 26 in the skirt 14 of the fixed body 10, but with a clearance which allows the movable body 12 to move freely between its two longitudinally-spaced positions in which it opens and closes the valve and shown in full lines and broken lines respectively in Figure 1.

As illustrated, the peripheral projections 38 preferably are saw-toothed in longitudinal profile. This profile is defined by a straight edge 40 and a ramp edge 42.

The straight edge 40 faces the open end of the skirt 28 of the movable body 12, that is inwardly of the tank, and the height of the ramp edge 42 decreases from the end of the straight edge 40 towards the opposite end of the skirt 28.

The arrangement described above enables the movable body 12 to be snap engaged in the fixed body 10. As shown in Figure 3, the unit is assembled by the insertion of the movable body 12 into the fixed body 10 in the direction of the arrow A. In this operation, the ramp edges 42 of the peripheral projections 38 exert a force on the open end of the skirt 14 of the fixed body 10 which resiliently expands this lower portion in the direction of the arrows B, finally enabling the projections 38 to snap-engage the apertures 26.

Once this snap-engagement is effected, the two bodies 10 and 12 are permanently interconnected as the straight edges 40 of the projections 38 prevent the movable body 12 from being removed from the fixed body 10 since, in the open position of the valve, the straight edges 40 bear against the corresponding lower edges of the apertures 26.

As can be seen from Figure 1, the open end of the movable body 12 projects from the open end of the fixed body 10.

Thanks to this projecting arrangement, the lower end of the movable body 12 remains fully exposed to the impacts of fuel surges from the tank in the direction of the arrows C of Figure 1, which impacts cause the movable body 12 to move towards its position closing the valve (shown in a broken outline) in the direction of the arrow D of Figure 1. This movement is assisted by fuel filling the movable body 12 as a result of the lower end of the skirt 28 being completely open to the fuel.

## Claims

1. A vent and safety roll-over valve for vehicle tanks, comprising:
- a bell-shaped fixed hollow body (10) having a substantially cylindrical skirt (14) with means (18) for fixing it in a hole in the top of the tank, and an upper wall (16) provided with a conical valve seat (20) inside the body (10) and a pipe union (22) outside the body (10) for connection to a vent pipe, as well as a through-hole (24) which puts the top of the seat (20) in communication with the inside of the pipe union (22), and
- a bell-shaped movable hollow body (12) open towards the inside of the tank, imprisoned in the fixed body (10) and having an upper wall (30) with a projection (32) constituting an obturator pin adapted to cooperate with the valve seat (20), the body (12) being slidable, with clearance, in the skirt (14) of the fixed body (10) between a position in which the obturator pin (32) does not engage the valve seat (20) and the valve is open and a position in which the pin (32) engages the valve seat (20) as a result of a thrust exerted by the fuel and/or, in the case of overturning, by gravity, and the valve is closed,
- and in which the fixed body (10) is open towards the inside of the tank, and the movable body (12) is imprisoned in the fixed body (10) by mutual engagement formations (26, 38) provided on the respective skirts (14, 28) of the two bodies (10, 12),
**characterised in that** the fixed body (10) is fully open towards the inside of the tank, the open end of the movable body (12) projects from the open end of the fixed body (10), and the mutual engagement formations are constituted, on the one hand, by apertures (26) formed in the skirt (14) of the fixed body (10) and, on the other hand, by peripheral projections (38) formed on the skirt (28) of the movable body (12) and engaged permanently in the apertures (26) with sufficient clearance to allow the movable body (12) to move freely between its two positions in which it opens and closes the valve.

2. A valve according to Claim 1, **characterised in that** the peripheral projections (38) are snap engaged in the apertures (26) as a result of a resilient expansion of the skirt (14) of the fixed body (10).

3. A valve according to Claim 2, **characterised in that** the peripheral projections (38) on the skirt (28) of the movable body (12) are saw-toothed in longitudinal profile, with a straight edge (40) facing the open end of the skirt (28) facing into the tank and a ramp edge (42)the height of which declines from the end of the straight edge (40) towards the opposite end of the skirt (28) so as to enable the movable body (12) to be snap engaged in the fixed body (10) by the forcing of the saw-tooth projections (38) through the open end of the skirt (14) of the fixed body (10) into the position in which the saw-tooth projections (38) are located in their associated apertures (26).

## Patentansprüche

1. Ventil und Überroll-Sicherheitsventil für Fahrzeugtanks, wobei das Ventil enthält:
- einen glockenförmigen, ortsfesten, hohlen Körper (10), der einen im Wesentlichen zylindrischen Mantel (14) mit einer Einrichtung (18), um ihn in einer Öffnung an der Oberseite des Tanks zu befestigen, sowie eine obere Wand (16) besitzt, die zwischen einem kegelförmigen Ventilsitz (20) innerhalb des Körpers (10) und einem Rohrstutzen (22) außerhalb des Körpers (10) vorgesehen ist, um den Anschluss zu einem Auslassrohr als auch zu einer Durchgangsöffnung (24) zu bilden, durch die die Oberseite des Sitzes (20) mit der Innenseite des Rohrstutzens (22) in Verbindung gebracht wird, und
- einen glockenförmigen, bewegbaren, hohlen Körper (12), der sich zur Innenseite des Tanks öffnet, im ortsfesten Körper (10) gefangen ist und eine obere Wand (30) mit einem Vorsprung (32) besitzt, der einen Verschlusszapfen bildet, der so aufgebaut ist, dass er mit dem Ventilsitz (20) zusammenwirkt, wobei der Körper (12) mit einem Spiel im Mantel (14) des ortsfesten Körpers (10) zwischen einer Stellung, in der der Verschlusszapfen (32) nicht in den Ventilsitz (20) eingreift und das Ventil geöffnet ist, sowie einer Stellung verschiebbar ist, in der der Zapfen (32) in den Ventilsitz (20) infolge eines Drucks eingreift, der vom Kraftstoff und/oder im Falle eines Überschlags durch die Schwerkraft ausgeübt wird, und das Ventil geschlossen ist,
- und wobei sich der ortsfeste Körper (10) zur Innenseite des Tanks öffnet und der bewegbare Körper (12) im ortsfesten Körper (10) durch gegenseitige Eingreifelemente (26, 38) gefangen ist, die auf entsprechenden Mänteln (14, 28) der beiden Körper (10, 12) vorgesehen sind,
**dadurch gekennzeichnet, dass** der ortsfeste Körper (10) zur Innenseite des Tanks vollständig geöffnet ist, wobei das offene Ende des bewegbaren Körpers (12) vom offenen Ende des ortsfesten Körpers (10) vorspringt, und wobei die gegenseitigen Eingreifelemente einerseits von Öffnungen (26), die im Mantel (14) des ortsfesten Körpers (10) ausgebildet sind, sowie andererseits von peripheren Vorsprüngen (38) gebildet werden, die am Mantel (28) des bewegbaren Körpers (12) ausgebildet sind und dauernd in die Öffnungen (26) mit einem ausriechenden Spiel eingreifen, damit sich der bewegbare Körper (12) zwischen seinen beiden Stellungen frei bewegen kann, in denen er das Ventil öffnet und schließt.

2. Ventil gemäß Anspruch 1, **dadurch gekennzeichnet, dass** die peripheren Vorsprünge (38) dadurch in die Öffnungen (26) eingeschnappt werden, dass sich der Mantel (14) des ortsfesten Körpers (10) elastisch ausdehnt.

3. Ventil gemäß Anspruch 2, **dadurch gekennzeichnet, dass** die peripheren Vorsprünge (38) auf dem Mantel (28) des bewegbaren Körpers (12) ein sägezahnförmiges Längsprofil mit einer geraden Flanke (40), die zum offenen Ende des Mantels (28) gerichtet ist, das in den Tank gerichtet ist, und mit einer ansteigenden Flanke (42) besitzen, deren Höhe vom Ende der geraden Flanke (40) zum gegenüber liegenden Ende des Mantels (28) abnimmt, damit der bewegbare Körper (12) in den ortsfesten Körper (10) dadurch eingeschnappt werden kann, dass die sägezahnförmigen Vorsprünge (38) durch das offene Ende des Mantels (14) des ortsfesten Körpers (10) in jene Stellung gezwungen werden, in der die sägezahnförmigen Vorsprünge (38) in ihren entsprechenden Öffnungen (26) angeordnet sind.

## Revendications

1. Clapet de mise à l'air et de sécurité au retournement pour réservoirs de véhicule, comprenant:
un corps creux fixe en forme de cloche (10) comportant une jupe sensiblement cylindrique (14) avec un moyen (18) destiné à le fixer dans un orifice en partie supérieure du réservoir, et une paroi supérieure (16) comportant un siège de soupape conique (20) à l'intérieur du corps (10) et un raccord de tuyauterie (22) à l'extérieur du corps (10) afin d'assurer le raccordement à une tuyauterie de mise à l'air, de même qu'un orifice traversant (24) qui met la partie supérieure du siège (20) en communication avec l'intérieur du raccord de tuyauterie (22), et
un corps creux mobile en forme de cloche (12) débouchant vers l'intérieur du réservoir, emprisonné dans le corps fixe (10) et comportant une paroi supérieure (30) avec une saillie (32) constituant une broche formant obturateur adaptée pour coopérer avec le siège de clapet (20), le corps (12) pouvant coulisser, avec un certain jeu, dans la jupe (14) du corps fixe (10) entre une position dans laquelle la broche formant obturateur (32) n'est pas en appui sur le siège de clapet (20) et le clapet est ouvert, et une position dans laquelle la broche (32) est en appui sur le siège de clapet (20), en conséquence d'une poussée exercée par le carburant et/ou, en cas de retournement, par la gravité, et le clapet est fermé,
et dans lequel le corps fixe (10) débouche vers l'intérieur du réservoir, et le corps mobile (12) est emprisonné dans le corps fixe (10) par des structures d'assemblage mutuel (26, 38) placées sur les jupes respectives (14, 28) des deux corps (10, 12),
**caractérisé en ce que** le corps fixe (10) débouche entièrement vers l'intérieur du réservoir, l'extrémité débouchante du corps mobile (12) est en saillie par rapport à l'extrémité débouchante du corps fixe (10), et les structures d'assemblage mutuel sont constituées, d'une part, par des ouvertures (26) formées sur la jupe (14) du corps fixe (10), et, d'autre part, par des saillies périphériques (38) formées sur la jupe (28) du corps mobile (12) et assemblées à demeure dans les ouvertures (26) avec un jeu suffisant pour permettre au corps mobile (12) de se déplacer librement entre ses deux positions dans lesquelles il ouvre et ferme le clapet.

2. Clapet selon la revendication 1, **caractérisé en ce que** les saillies périphériques (38) sont assemblées par encliquetage dans les ouvertures (26) en conséquence de la déformation élastique de la jupe (14) du corps fixe (10).

3. Clapet selon la revendication 2, **caractérisé en ce que** les saillies périphériques (38) sur la jupe (28) du corps mobile (12) présentent un profil longitudinal en dent de scie, avec un bord rectiligne (40) faisant face à l'extrémité débouchante de la jupe (28), face à l'intérieur du réservoir, et un bord en rampe (42) dont la hauteur diminue à partir de l'extrémité du bord rectiligne (40) vers l'extrémité opposée de la jupe (28) de manière à permettre l'encliquetage du corps mobile (12) dans le corps fixe (10) en forçant les saillies en dent de scie (38) à travers l'extrémité débouchante de la jupe (14) du corps fixe (10) vers la position dans laquelle les saillies en dent de scie (38) sont situées dans leur ouverture (26) associée.
